# EUROPEAN PATENT SPECIFICATION

(11) **EP 1 068 479 B1**
(45) Date of publication and mention of the grant of the patent: **27.08.2003**
(21) Application number: 99905412.5
(22) Date of filing: 08.02.1999
(51) Int. Cl.: F25D 27/00

(54) **A REFRIGERATOR ILLUMINATED BY AN ACRYLIC SHEET**
KÜHLSCHRANK MIT EINER BELEUCHTETEN ACRYLPLATTE
REFRIGERATEUR ECLAIRE PAR UNE FEUILLE ACRYLIQUE

(30) Priority: 03.04.1998 TR 9800656
(43) Date of publication of application: 17.01.2001
(73) Proprietor: Arcelik A.S., 81719 Tuzla, Istanbul (TR)
(72) Inventor: YAVUZ, NIHAT;, Tuzla 81719 Istanbul (TR); ERINCIN, Burhan, Arçelik a.ş., Tuzla 81719 Istanbul (TR); MISIR, Ismail, Arçelik a.ş., 81719 Istanbul (TR); ÖZKADI, Fatih, Arçelik a.ş., 81719 Istanbul (TR); AKAY, Müge, Arçelik a.ş., 81719 Istanbul (TR)
(74) Representative: LOUIS- PÖHLAU- LOHRENTZ
(86) International application number: TR9900005
(87) International publication number: WO99051923

(56) References cited:
- WO-A1-98/14740
- US-A- 5 450 297
- US-A- 5 768 909

## Description

The present invention is related to a refrigerator operating and being cooled by the air circulating within the device, according to the preamble of claim 1. Such a refrigerator is disclosed in WO-A-1998/014740.

For the internal illumination of a refrigerator an efficient illumination system that consumes little energy during the service life of the refrigerator is desired. In order to provide a proper internal illumination, the lighting elements inside the refrigerator are required to be contained within a housing. In the conventional refrigerators the lighting elements are usually placed in the refrigerators in transparent or translucent plastic housings and the inner design of the refrigerators is adapted accordingly.

Conventional refrigerators are internally illuminated by one or more light sources such as bulbs, depending on the design and dimensions of the device. Such light sources are activated by suitable electro-mechanical switching devices on the opening of the door of the refrigerator. These light sources provide poor illumination and to improve the intensity of illumination, the number and/or capacity of the bulbs should be increased which in turn, leads to an increase in cost and energy consumption. As such light sources cannot provide sufficient illumination, the contents of the refrigerator cannot be seen in their actual colours. Another disadvantage of these light sources is that they provide local illumination. While adequate illumination is provided at the locations where the light source is placed, it diminishes and a uniformity in illumination cannot be provided as the distance from the light source increases (which is referred to as the transmission distance). In relation with the present invention, the European Patent No. EP 0549679 B1 discloses an illumination system which includes an edge-lit light-transmitting sheet having two opposed surfaces to each of which a matrix of dots is applied and thus provides an illumination via the transportation of light along the said sheet by means of the said dots. In the referred patent, it is also mentioned that the intensity of illumination is increased or reduced according to the density of the said dots on the surface.

In WO 1998/014740, a conventional refrigerator in which the illumination is provided by an edge-lit acrylic sheet with an etched pattern on its surface is disclosed.

The object of the present invention is to provide the internal illumination of the freezer and fresh food storage compartments of a refrigerator which operates and which is cooled according to the principle of air circulation within the refrigerator, by means of an acrylic sheet with an etched pattern on its surface, wherein the component made of plastics or the like material, comprising the cold air diffusion system that contains the air diffusion channels , is applied on the edges of the said sheet by injection moulding so that it will form a monobloc component and by means of lighting tubes located at the upper and/or lower parts of the said sheet.

he internal illumination system realised in order to attain the object of the invention is defined in claim 1.

The invention is more fully described with reference to the attached drawings, wherein:

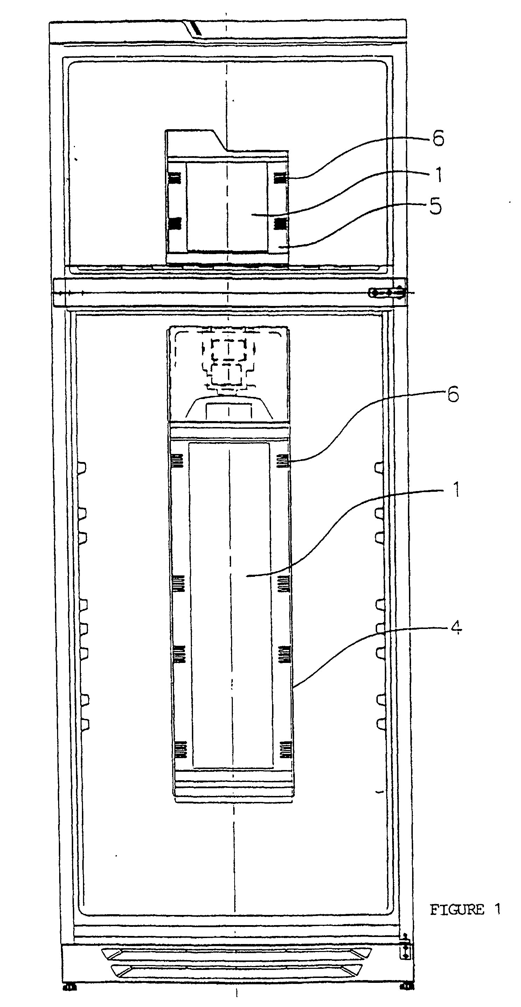

Figure 1, is the general section view of the illumination assembly located on the air diffusion system in the refrigerator.

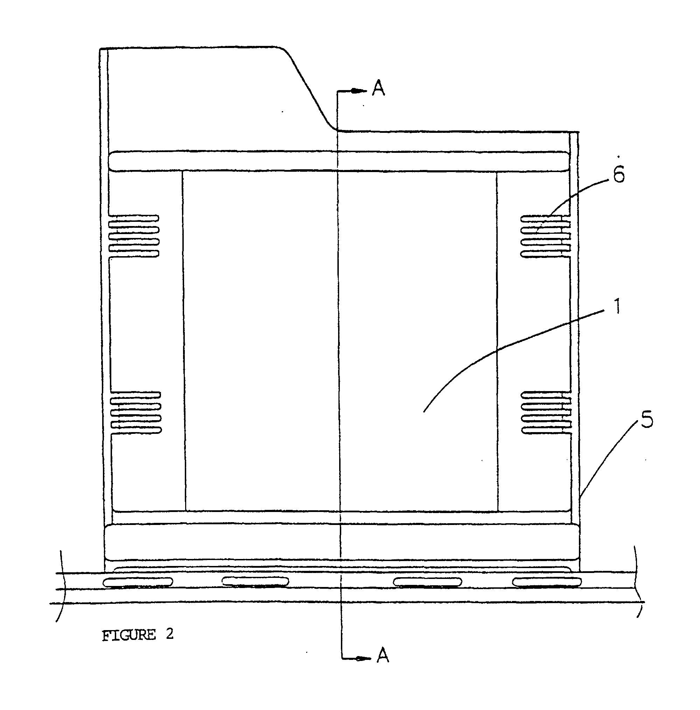

Figure 2, is the section view of the illumination assembly located in the freezer compartment of the refrigerator.

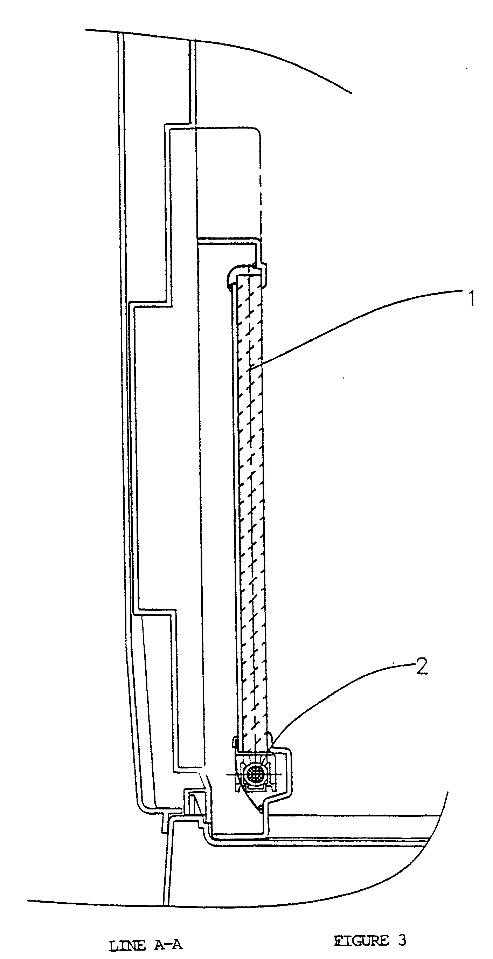

Figure 3, is the cross section taken along the line A-A shown in Figure 2.

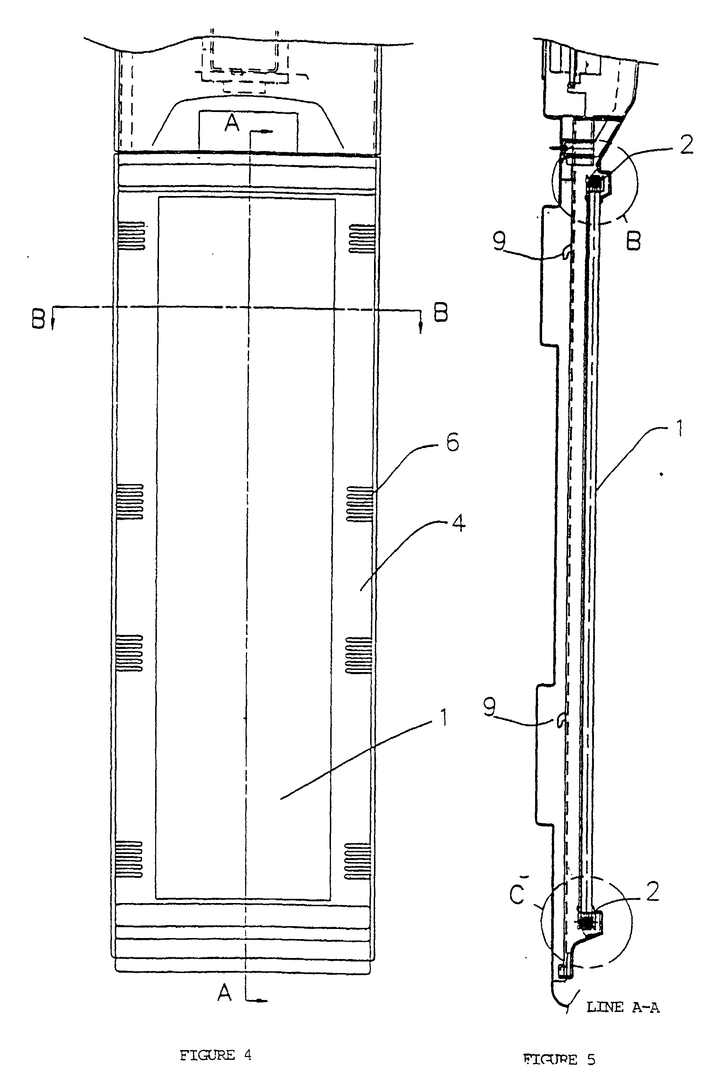

Figure 4, is the section view of the illumination assembly located in the fresh food storage compartment of the refrigerator.
Figure 5, is the cross section taken along the line A-A shown in Figure 4.

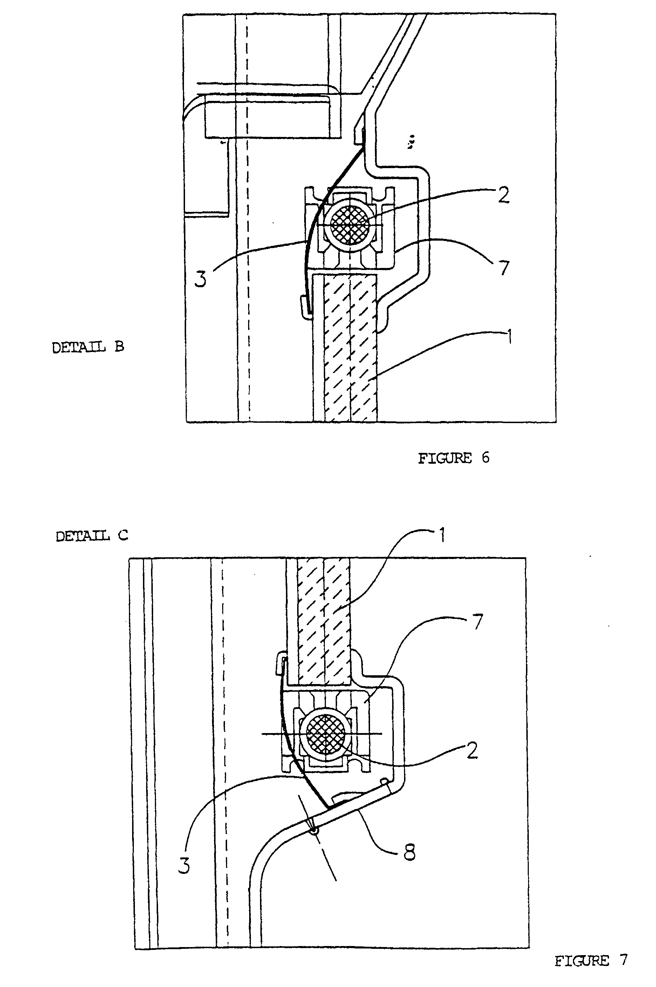

Figure 6, is the detail B shown in Figure 5.
Figure 7, is the detail C shown in Figure 5.

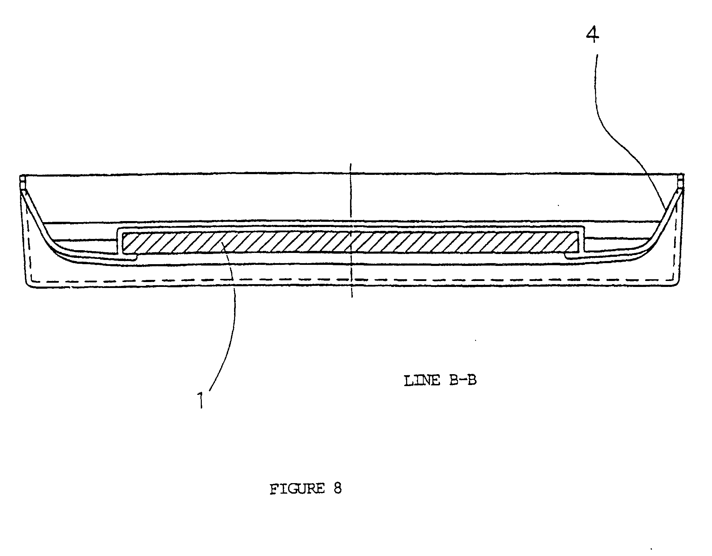

Figure 8, is the cross section taken along the line B-B shown in Figure 4.

Acrylic sheet (1) and a part (4 or 5) made of plastics and the like material, forming the cold air diffusion system with the air diffusion channels (6), are prepared as a monoblock piece. The acrylic sheet (1) with etched surface which is cut in desired dimensions is placed in a specially prepared mould by vacuum aspiration and plastic is injected into the mould according to predetermined injection parameters, after the mould is closed. After waiting for a certain time, the mould is opened and the resulting monoblock part is removed from the mould by vacuum aspiration.

During these processes, plastics material is not injected on the edge or edges intended to receive the light source (2).

In order to obtain a good surface quality, the outer surface is provided in the fixed mould while the acrylic sheet (1) is placed in the mould.

The edge or edges where the light source (2) is to be located, are provided with a hinged lid (8) to facilitate the replacement of the light source (2) and sockets (7) to fit the light source (2) in.

The acrylic sheet (1) with plastic-coated edges is provided with lugs (9) during injection of plastics, that engage into the recesses made on the body of the refrigerator to facilitate the connection/disconnection of the component (4 or 5) made of plastics and the like material forming the air diffusion system to/from the chassis of the refrigerator.

A reflective layer covering the exterior edges of the sheet is placed to avoid light leakage outside the acrylic sheet (1) during the illumination of the light sources (2).

## Claims

1. A refrigerator that is cooled according to the principle of air circulation, comprising an acrylic sheet (1) with an etched pattern on its surface that provides the internal illumination by diffusion of light within the refrigerator, and a component (4 or 5) made of plastics or a similar material that comprises the cold air diffusion system containing air distribution channels (6), **characterised in that**, the acrylic sheet (1) and the component (4 or 5) are prepared as a monoblock piece by injection moulding, such that the lateral edges of the acrylic sheet (1) are coated with plastics and light sources (2) that are placed on the uncoated edges of the acrylic sheet (1).

2. A refrigerator that is cooled according to the principle of air circulation, according to claim 1, **characterised in that** plastics or similar material is not injected on those edges of the acrylic sheet (1) where the said light sources (2) are intended to be placed.

3. A refrigerator that is cooled according to the principle of air circulation, according to claims 1 and 2, **characterised in that** the external edges of the said sheet (1) are covered by a reflector layer in order to avoid light leakage outside the acrylic sheet (1) during the illumination of the light sources (2).

4. A refrigerator that is cooled according to the principle of air circulation, according to claims 1 and 2, **characterised in that** the acrylic sheet (1), the edges of which are plastic-coated, is provided with lugs (9) during plastics injection, that can engage into the recesses made on the body of the refrigerator to facilitate the connection/ disconnection of the component (4 or 5) made of plastics or a similar material comprising the cold air diffusion system.

5. A refrigerator that is cooled according to the principle of air circulation, according to claims 1 and 2, **characterised in that** the edge or edges where the light source (2) is to be located, are provided with a hinged lid (8) to facilitate the replacement of the light source (2).

6. A refrigerator that is cooled according to the principle of air circulation, according to claims 1 and 2, **characterised in that** sockets (7) are provided for placing the light sources (2) in the component (4 or 5) made of plastics or a similar material comprising the cold air diffusion system.

## Patentansprüche

1. Kühlschrank, der nach dem Prinzip der Luftzirkulation gekühlt ist, der eine Acrylplatte (1) mit einem geätzten Muster an ihrer Oberfläche aufweist, das eine innere Beleuchtung durch Lichtdiffusion im Kühlschrank ergibt, und der ein Bauteil (4 oder 5) aufweist, das aus Kunststoff oder aus einem ähnlichen Material besteht, welches das Kaltluftdiffusionssystem aufweist, das Luftverteilerkanäle (6) enthält,
**dadurch gekennzeichnet,**
**dass** die Acrylplatte (1) und das Bauteil (4 oder 5) durch Spritzgießen einteilig ausgebildet sind, so dass die Seitenränder der Acrylplatte (1) mit Kunststoff beschichtet und an den unbeschichteten Rändern der Acrylplatte (1) Lichtquellen (2) angeordnet sind.

2. Kühlschrank, der nach dem Prinzip der Luftzirkulation gekühlt ist, nach Anspruch 1,
**dadurch gekennzeichnet,**
**dass** der Kunststoff oder das ähnliche Material nicht an den Rändern der Acrylplatte (1) spritzgegossen ist, an welchen die Lichtquellen (2) vorgesehen sind.

3. Kühlschrank, der nach dem Prinzip der Luftzirkulation gekühlt ist, nach Anspruch 1 und 2,
**dadurch gekennzeichnet,**
**dass** die Außenränder der Platte (1) durch eine Reflektorschicht bedeckt sind, um einen Lichtaustritt aus der Acrylplatte (1) heraus während des Leuchtens der Lichtquellen (2) zu vermeiden.

4. Kühlschrank, der nach dem Prinzip der Luftzirkulation gekühlt ist, nach Anspruch 1 und 2,
**dadurch gekennzeichnet,**
**dass** die Acrylplatte (1), deren Ränder mit Kunststoff beschichtet sind, beim Spritzgießen mit Zapfen (9) versehen wird, die in Aussparungen eingreifen können, die am Gehäuse des Kühlschrankes ausgebildet sind, um die Verbindung/Trennung des Bauteiles (4 oder 5) aus Kunststoff oder ähnlichem Material, das das Kaltluftdiffusionssystem aufweist, zu erleichtern.

5. Kühlschrank, der nach dem Prinzip der Luftzirkulation gekühlt ist, nach Anspruch 1 und 2,
**dadurch gekennzeichnet,**
**dass** der Rand oder die Ränder, an denen die Lichtquelle (2) angebracht ist, mit einem Scharnierdeckel (8) versehen sind, um den Ersatz der Lichtquelle (2) zu erleichtern.

6. Kühlschrank, der nach dem Prinzip der Luftzirkulation gekühlt ist, nach Anspruch 1 und 2
**dadurch gekennzeichnet,**
**dass** zum Anbringen der Lichtquellen (2) im Bauteil (4 oder 5) aus Kunststoff oder ähnlichem Material, das das Kaltluftdiffusionssystem aufweist, Fassungen (7) vorgesehen sind.

## Revendications

1. Un réfrigérateur qui est refroidi conformément au principe de la circulation d'air, comprenant une feuille acrylique (11) ayant un motif gravé sur sa surface qui apporte l'éclairage interne par diffusion de lumière à l'intérieur du réfrigérateur, et un composant (4 ou 5) en matière plastique ou matériau similaire, qui comprend le système à diffusion d'air froid contenant des canaux de répartition d'air (6), **caractérisé en ce que** la feuille acrylique et le composant (4 ou 5) sont réalisés en une pièce monobloc par moulage par injection de façon telle que les bords latéraux de la feuille acrylique (1) sont recouverts de matière plastique et que les sources de lumière (2) sont situées sur les bords non recouverts de la feuille acrylique (1).

2. Un réfrigérateur qui est refroidi conformément au principe de la circulation d'air selon la revendication 1, **caractérisé en ce que** des matières plastiques ou un matériau similaire ne sont pas injectés sur ceux des bords de la feuille acrylique (1) où sont destinées à être placées lesdites sources de lumière (2).

3. Un réfrigérateur qui est refroidi conformément au principe de la circulation d'air selon les revendications 1 et 2, **caractérisé en ce que** les bords extérieurs de ladite feuille (1) sont recouverts par une couche réflectrice en vue d'éviter les pertes de lumière hors de la feuille acrylique (1) au cours de l'éclairement par les sources lumineuses (2).

4. Un réfrigérateur qui est refroidi conformément au principe de la circulation d'air selon les revendications 1 et 2, **caractérisé en ce que** la feuille acrylique (1) dont les bords sont recouverts de matière plastique est obtenue avec des pattes (9) au cours de l'injection de matière plastique, qui peuvent coopérer avec des logements prévus dans le corps du réfrigérateur pour faciliter le montage/démontage du composant (4 ou 5) réalisé en matière plastique ou en matériau similaire et contenant le système de diffusion d'air froid.

5. Un réfrigérateur qui est refroidi conformément au principe de la circulation d'air selon les revendications 1 et 2, **caractérisé en ce que** le ou les bord(s) où est destinée à être placée la source lumineuse (2) sont équipés d'un couvercle à charnière (8) pour faciliter le remplacement de la source lumineuse (2).

6. Un réfrigérateur qui est refroidi conformément au principe de la cinariation d'air selon les revendications 1 et 2, **caractérisé en ce que** des douilles (7) sont prévues pour placer les sources lumineuses (2) dans le composant (4 ou 5) réalisé en matière plastique ou en matériau similaire et contenant le système de diffusion d'air froid.
